# EUROPÄISCHE PATENTSCHRIFT

(11) **EP 2 748 011 B1**
(45) Veröffentlichungstag und Bekanntmachung des Hinweises auf die Patenterteilung: **05.08.2015**
(21) Anmeldenummer: 12753462.6
(22) Anmeldetag: 22.08.2012
(51) Int. Cl.: B60B 5/02, B60B 7/06

(54) **RAD FÜR EIN KRAFTFAHRZEUG**
WHEEL FOR A MOTOR VEHICLE
ROUE POUR UN VÉHICULE AUTOMOBILE

(30) Priorität: 25.08.2011 EP 11178788
(43) Veröffentlichungstag der Anmeldung: 02.07.2014
(73) Patentinhaber: BASF SE, 67056 Ludwigshafen (DE); ElringKlinger AG, 72581 Dettingen/Erms (DE)
(72) Erfinder: HESS, Heiko, 67742 Lauterecken (DE); WENIGMANN, Sven, 68167 Mannheim (DE); BOHRMANN, Gerhard, 67459 Böhl-Iggelheim (DE); GLEITER, Uwe, 67434 Neustadt (DE); RAU, Walter, 68165 Mannheim (DE); HUMMEL, Volker, 73252 Lenningen (DE)
(74) Vertreter: Jacobi, Markus Alexander
(86) Internationale Anmeldenummer: PCT/EP2012/066350
(87) Internationale Veröffentlichungsnummer: WO 2013/026880

(56) Entgegenhaltungen:
- WO-A2-2007/092201
- DE-A1- 4 223 290
- DE-U1- 29 706 229
- JP-A- 2 038 101
- US-A1- 2005 073 191

## Beschreibung

Die Erfindung geht aus von einem Rad für ein Kraftfahrzeug, umfassend einen Radkörper mit einem Felgenband zur Aufnahme eines Reifens, und einen Felgenstern oder eine Radscheibe, wobei im Felgenstern oder in der Radscheibe Durchgangsbohrungen zur Aufnahme von Befestigungsmitteln des Radkörpers an einer Fahrzeugachse ausgebildet sind.

Derzeit werden Räder für Kraftfahrzeuge aus metallischen Werkstoffen, üblicherweise aus Stahl oder Aluminium, gefertigt. Das Rad wird im Allgemeinen mit Kugelkopfschrauben oder Kegelkopfschrauben an einer Radhalterung, üblicherweise einer Bremstrommel oder Bremsscheibe, am Kraftfahrzeug befestigt. Hierdurch wird das Rad gegen die Halterung gepresst und die Kraftübertragung vom Antrieb des Fahrzeugs an das Rad wird durch Reibung zwischen dem Rad und der Anlagefläche des Rades an der Radhalterung realisiert.

Zur Reduzierung des Kraftstoff-Verbrauchs des Kraftfahrzeugs und damit zur Energieeinsparung soll das Gewicht des Kraftfahrzeugs reduziert werden. Hierzu wird z. B. angestrebt, möglichst viele Komponenten des Kraftfahrzeugs aus Werkstoffen mit geringem Gewicht, beispielsweise aus Kunststoffen, zu fertigen und die derzeitigen metallischen Werkstoffe durch Kunststoffe zu ersetzen.

Aus der gattungsbildenden DE-U 297 06 229 ist es bereits bekannt, Räder für ein Kraftfahrzeug aus einem faserverstärkten Kunststoff zu fertigen. Aufgrund der großen Kräfte, die an das Rad übertragen werden, neigt der Kunststoff des Rades jedoch zum Kriechen, was zu einer Verformung des Rades führen kann. Weiterhin wirken hohe Kräfte auf den Radkörper und die Durchgangsbohrungen, durch die die Schrauben zur Montage des Rades geführt sind, und es besteht die Gefahr, dass der Radkörper im Bereich der Durchgangsbohrungen beginnt, zu fließen und sich auch hierdurch verformt. Hierbei ist auch die Verstärkung aus Fasern im Allgemeinen nicht ausreichend, um das Kriechen und die damit verbundene Verformung zu verhindern. Zudem führt ein zu großer Anteil an Fasern, der eine ausreichende Festigkeit bezüglich der Kriechneigung gewährleisten würde, dazu, dass der Werkstoff, aus dem die Felge gefertigt wird, zu spröde wird und damit den Belastungen beim Fahren mit dem Kraftfahrzeug nicht standhält. Dies zeigt sich z. B. durch Risse in der Felge, die bis zum Bruch führen können.

Ein Rad aus einem Kunststoffmaterial ist ebenfalls aus DE-A 42 23 290 bekannt. Hierbei wird ein Verbund-Kunstharzrad mit zwei oder mehr Teilgussstücken zu einer einzigen Baueinheit zusammengefügt. Hierbei umfasst mindestens eines der Teilgussstücke ein mittels Langfasern verstärktes wärmehärtendes Kunstharz und das andere Teilgussstück Metall und/oder einen faserverstärkten Kunststoff. Eines der Teilgussstücke ist dabei im Allgemeinen das Felgenband oder ein Teil des Felgenbandes, und das zweite Teilgussstück der Felgenstern oder die Radscheibe. Die Unterteilung von Felgenband und Radscheibe bzw. Felgenstern hat den zusätzlichen Nachteil, dass an der Verbindungsstelle die auf das Rad wirkenden Kräfte übertragen werden müssen, wobei hier durch die zusätzliche Verbindung eine Schwachstelle entstehen kann.

Ein weiteres Kunststoffrad aus einem Polymermaterial ist auch in DE-U 82 05 082 offenbart. Das hier offenbarte Fahrzeugrad weist ein Felgenband auf und Speichen, mit denen eine Nabe des Rades mit dem Felgenband verbunden ist. Radnabe, Speichen und Felgenband sind dabei aus einem Kunststoffmaterial hergestellt und integral miteinander verbunden. Auch hier ergibt sich der Nachteil, dass insbesondere bei hohen Kräften, die auf das Rad übertragen werden, eine Verformung und ein Kriechen des Kunststoffs erfolgen kann. Weiterhin bietet das Rad keinen ausreichenden Schutz gegen Beschädigungen, wie sie bei unvorsichtigem Fahren bei Kontakt mit einem Bordstein entstehen können.

Ein weiterer Nachteil der aus dem Stand der Technik bekannten Fahrzeugräder aus einem Kunststoffmaterial ist, dass diese im Allgemeinen eine Radscheibe oder eine Vielzahl an Speichen aufweisen, um die notwendige Stabilität zu erhalten, so dass es nicht oder nur sehr eingeschränkt möglich ist, unterschiedliche Radgestaltungen zu realisieren.

Aufgabe der vorliegenden Erfindung ist es daher, ein Rad für ein Kraftfahrzeug, umfassend einen Radkörper mit einem Felgenband zur Aufnahme eines Reifens und einen Felgenstern oder eine Radscheibe bereitzustellen, das zum einen eine ausreichende Stabilität aufweist und zum anderen auch eine Vielzahl von verschiedenen Gestaltungen ermöglicht.

Gelöst wird die Aufgabe durch ein Rad für ein Kraftfahrzeug, umfassend einen Radkörper mit einem Felgenband zur Aufnahme eines Reifens und einen Felgenstern oder eine Radscheibe, wobei im Felgenstern oder in der Radscheibe Durchgangsbohrungen zur Aufnahme von Befestigungsmitteln des Radkörpers an einer Fahrzeugachse ausgebildet sind und wobei der Radkörper aus einem starken Polymermaterial gefertigt ist und mit einer Blende kraftschlüssig, formschlüssig oder stoffschlüssig verbunden ist, wobei die Blende den Felgenstern oder die Radscheibe abdeckt.

Durch die kraftschlüssige, formschlüssige oder stoffschlüssige Verbindung der Blende mit dem Radkörper wird eine zusätzliche Stabilität des Rades erzielt. Hierbei wirkt die Blende als zusätzliche Verstärkung des Rades. Weiterhin ist durch die getrennte Herstellung von Radkörper und Blende eine serientaugliche Herstellung des Radkörpers, zum Beispiel durch ein Extrusionsverfahren, Spritzgieß-Verfahren oder Gießverfahren möglich, wobei auf jeweils gleich geformte Radkörper unterschiedlich ausgestaltete Blenden aufgebracht werden können, so dass in Abhängigkeit von der eingesetzten Blende ein unterschiedliches Design des Rades möglich ist und gleichzeitig die Rippenstruktur des Radkörpers hinter der Blende verborgen werden kann. Durch die Verwendung des gleichen Radkörpers für unterschiedliche Blenden kann die Herstellung der Räder für das Kraftfahrzeug vereinfacht werden, da nicht unterschiedliche Werkzeuge für verschiedene Radkörper benötigt werden. Die Gestaltung des Rades ergibt sich dabei ausschließlich aus der Gestaltung der Blende.

In einer Ausführungsform ist die Blende einseitig mit dem Radkörper verbunden. In diesem Fall ist die Blende auf der Außenseite des Radkörpers angebracht. Alternativ ist es auch möglich, zwei Blenden vorzusehen, wobei eine Blende auf der Radaußenseite und eine Blende auf der Radinnenseite angebracht ist. Durch die Verwendung der zweiten Blende wird eine gegenüber nur einer Blende weiter verbesserte Stabilität des Rades erzielt.

Die Blende kann zum Beispiel aus einem thermoplastischen Polymermaterial, einem duroplastischen Polymermaterial oder aus einem Metall gefertigt sein. Wenn die Blende aus einem thermoplastischen Polymermaterial gefertigt ist, ist es besonders vorteilhaft, wenn die Blende formschlüssig mit dem Radkörper verbunden wird, zum Beispiel durch ein Schweißverfahren. Neben dem Verschweißen der Blende mit dem Radkörper ist es alternativ auch möglich, die Blende mit dem Radkörper zum Beispiel durch ein Klebeverfahren zu verbinden.

Auch eine kraftschlüssige Verbindung von Blende mit Radkörper ist möglich, wenn die Blende aus einem thermoplastischen oder duroplastischen Polymermaterial gefertigt ist. In diesem Fall ist es zum Beispiel möglich, die Blende durch Verschrauben oder Vernieten mit dem Radkörper zu verbinden.

Wenn die Blende aus einem Metall gefertigt ist, wird die Blende vorzugsweise kraftschlüssig mit dem Radkörper verbunden. In diesem Fall erfolgt die Verbindung wie vorstehend beschrieben, zum Beispiel durch Schrauben oder Vernieten. Auch eine formschlüssige Verbindung ist möglich, wenn die Blende aus einem Metall gefertigt ist. In diesem Fall ist es zum Beispiel möglich, die Blende mit dem Kunststoffmaterial für den Radkörper zu umspritzen.

Als Material für die Blende eignen sich weiterhin auch sogenannte Organobleche, das heißt endlosfaserverstärkte thermoplastische flache Halbzeuge, oder einzelne vorimprägnierte thermoplastische Tapes.

Als Material für den Radkörper wird ein duroplastischer oder ein thermoplastischer Kunststoff eingesetzt. Dieser kann gefüllt oder ungefüllt eingesetzt werden. Bevorzugt werden jedoch gefüllte Polymere verwendet.

Als Polymere für den Radkörper und für die Blende eignen sich zum Beispiel natürliche und synthetische Polymere oder deren Derivate, Naturharze sowie synthetische Harze und deren Derivate, Proteine, Cellulose-Derivate und dergleichen. Diese können - müssen jedoch nicht - chemisch oder physikalisch härtend, beispielsweise luftaushärtend, strahlungshärtend oder temperaturhärtend, sein.

Neben Homopolymeren können auch Copolymere oder Polymergemische eingesetzt werden.

Bevorzugte Polymere sind ABS (Acrylnitril-Butadien-Styrol); ASA (Acrylnitril-Styrol-Acrylat); acrylierte Acrylate; Alkydharze; Alkylenvinylacetate; Alkylenvinylacetat-Copolymere, insbesondere Methylenvinylacetat, Ethylenvinylacetat, Butylenvinylacetat; Alkylenvinylchlorid-Copolymere; Aminoharze; Aldehyd- und Ketonharze; Cellulose und Cellulose-Derivate, insbesondere Hydroxyalkylcellulose, Celluloseester, wie -acetate, -propionate, -butyrate, Carboxyalkylcellulosen, Cellulosenitrate; Epoxyacrylate; Epoxidharze; modifizierte Epoxidharze, zum Beispiel bifunktionelle oder polyfunktionelle Bisphenol-A- oder Bisphenol-F-Harze, Epoxy-Novolak-Harze, bromierte Epoxidharze, cycloaliphatische Epoxidharze; aliphatische Epoxidharze, Glycidether, Vinylether, Ethylenacrylsäurecopolymere; Kohlenwasserstoffharze; MABS (transparentes ABS mit Acrylat-Einheiten enthaltend); Melaminharze; Maleinsäureanhydridcopolymerisate; (Meth)acrylate; Naturharze; Kolophoniumharze; Schellack; Phenolharze; Polyester; Polyesterharze, wie Phenylesterharze; Polysulfone (PSU); Polyethersulfone (PESU); Polyphenylensulfon (PPSU); Polyamide; Polyimide; Polyaniline; Polypyrole; Polybutylentherephtalat (PBT); Polycarbonate (zum Beispiel Makrolon^{®} der Bayer AG); Polyesteracrylate; Polyetheracrylate; Polyethylen; Polyethylenthiophene; Polyethylennaphthalate; Polyethylenterephtalate (PET); Polyethylenterephtalat-Glycol (PETG); Polypropylen; Polymethylmethacrylat (PMMA); Polyphenylenoxid (PPO); Polyoxymethylen (POM); Polystyrole (PS); Polytetrafluorethylen (PTFE); Polytetrahydrofuran; Polyether (zum Beispiel Polyethylenglycol, Polypropylenglycol); Polyvinyl-Verbindungen, insbesondere Polyvinylchlorid (PVC), PVC-Copolymere, PVdC, Polyvinylacetat sowie deren Copolymere, gegebenenfalls teilhydrolisierter Polyvinylalkohol, Polyvinylacetale, Polyvinylacetate, Polyvinylpyrrolidon, Polyvinylether, Polyvinylacrylate und -methacrylate in Lösung und als Dispersion sowie deren Copolymere, Polyacrylsäureester und Polystyrolcopolymere; Polystyrol (schlagfest oder nicht schlagfest modifiziert); Polyurethane, unvernetzte bzw. mit Isocyanaten vernetzt; Polyurethanacrylate; Stryrol-Acrylnitril (SAN); Styrol-Acryl-Copolymere; Styrol-Butadien-Blockcopolymere (zum Beispiel Styroflex^{®} oder Styrolux^{®} der BASF SE, K-Resin™ der TPC); Proteine, zum Beispiel Casein; SIS; Triazin-Harz, Bismaleimid-Triazin-Harz (BT), Cyanatester-Harz (CE), allylierter Polyphenylen-Ether (APPE). Weiterhin können Mischungen zweier oder mehrerer Polymere eingesetzt werden.

Besonders bevorzugte Polymere sind Acrylate, Acrylatharze, Cellulose-Derivate, Methacrylate, Methacrylatharze, Melamin- und Aminoharze, Polyalkylene, Polyimide, Epoxidharze, modifizierte Epoxidharze, zum Beispiel bifunktionelle oder polyfunktionelle Bisphenol-A- oder Bisphenol-F-Harze, Epoxy-Novolak-Harze, bromierte Epoxid-Harze, cycloaliphatische Epoxid-Harze; aliphatische Epoxid-Harze, Glycidether, Cyanatester, Vinylether, Phenolharze, Polyimide, Melaminharze und Aminoharze, Polyurethane, Polyester, Polyvinylacetale, Polyvinylacetate, Polystyrole, Polystyrol-Copolymere, Polystyrolacrylate, Styrol-Butadien-Blockcopolymere, Styrol-Acrylnitril-Copolymere, Acrylnitril-Butadien-Styrol, Acrylnitril-Styrol-Acrylat, Polyoxymethylen, Polysulfone, Polyethersulfone, Polyphenylensulfon, Polybutylenterephthalat, Polycarbonate, Alkylenvinylacetate und Vinylchlorid-Copolymere, Polyamide, Cellulose-Derivate sowie deren Copolymere und Mischungen zweier oder mehrerer dieser Polymere.

Insbesondere bevorzugte Polymere sind Polyamide, beispielsweise Polyamid 4, Polyamid 6, Polyamid 7, Polyamid 8, Polyamid 9, Polyamid 11, Polyamid 12, Polyamid 46, Polyamid 66, Polyamid 69, Polyamid 610, Polyamid 612, Polyamid 613, Polyamid 1212, Polyamid 1313, Polyamid 6T, Polyamid 9T, Polyamid MXD6, Polyamid 6I, Polyamid 6-3-T, Polyamid 6/6T, Polyamid 6/66, Polyamid 6/12, Polyamid 66/6/610, Polyamid 6I/6T, Polyamid PACM 12, Polyamid 6I/6T/PACM, Polyamid 12/MACMI, Polyamid 12/MACMT oder Polyamid PDA-T, bevorzugt Polyamid 46, Polyamid 6, Polyamid 11, Polyamid 12, Polyamid 66, Polyamid 66/6, Polyamid 6/10 oder Polyamid 6/12 sowie teilaromatisches Polyamid, zum Beispiel 6T/6, 6T/66, 6T/6I, Polypropylen, Polysulfone, Polyethersulfone, Polyphenylensulfone, Polybutylenterephthalat sowie deren Mischungen.

Den einzelnen Polymeren können übliche Additive, zum Beispiel Weichmacher, Vernetzer, Schlagzäh-Modifier oder Flammschutzmittel beigemischt werden.

Das Polymermaterial ist vorzugsweise verstärkt. Insbesondere ist das Polymermaterial faserverstärkt. Zur Verstärkung kann jede beliebige, dem Fachmann bekannte, zur Verstärkung übliche Faser verwendet werden. Geeignete Fasern sind zum Beispiel Glasfasern, Kohlenstofffasern, Aramidfasern, Borfasern, Basaltfasern, Metallfasern, Mineralfasern oder Kaliumtitanat-Fasern. Die Fasern können in Form von Kurzfasern, Langfasern oder Endlosfasern eingesetzt werden. Auch können die Fasern geordnet oder ungeordnet im Polymermaterial enthalten sein. Insbesondere bei Einsatz von Endlosfasern ist jedoch eine geordnete Anordnung üblich. Die Fasern können dabei zum Beispiel in Form von Einzelfasern, Fasersträngen, Matten, Geweben, Gestricken oder Rovings eingesetzt werden. Wenn die Fasern in Form von Endlosfasern, als Rovings oder als Fasermatte eingesetzt werden, so werden die Fasern üblicherweise in eine Form eingelegt und anschließend mit dem Polymermaterial umgossen. Der so hergestellte Radkörper kann einlagig oder mehrlagig aufgebaut sein. Bei einem mehrlagigen Aufbau können die Fasern der einzelnen Lagen jeweils gleichgerichtet sein oder die Fasern der einzelnen Lagen sind in einem Winkel von -90° bis +90° zueinander verdreht.

Als Kurzfasern werden im Rahmen der vorliegenden Erfindung Fasern mit einer Länge im Granulat von weniger als 5 mm verstanden. Langfasern sind Fasern in einem Granulat mit einer Länge im Bereich von 5 bis 30 mm, bevorzugt im Bereich von 7 bis 20 mm. Durch die Verarbeitung des Granulates werden die Langfasern im allgemeinen gekürzt, so dass diese im fertigen Bauteil im Allgemeinen eine Länge aufweisen, die im Bereich von 0,1 mm bis zur maximalen Abmessung des eingesetzten Granulates reichen kann. Bei üblicherweise eingesetzten Granulatgrößen liegt die maximale Länge im Bereich von bis zu 12 mm. Bei einem Granulat mit größeren Abmessungen kann die maximale Länge der Fasern auch darüber liegen.

Bevorzugt werden Langfasern eingesetzt. Bei Einsatz von Langfasern werden diese üblicherweise der Polymermasse vor dem Aushärten zugemischt. Der Grundkörper des Radkörpers kann zum Beispiel durch Extrusion, Spritzgießen oder Gießen gefertigt werden. Bevorzugt wird der gesamte Radkörper durch Spritzgießen oder Gießen gefertigt. Im Allgemeinen sind die Langfasern in dem Radkörper ungerichtet enthalten. Wenn der Radkörper durch ein Spritzgussverfahren hergestellt wird, kann sich eine Ausrichtung der Langfasern durch das Pressen der die Fasern enthaltenden Polymermasse durch eine Anspritzdüse in das Werkzeug ergeben. Der Anteil der Fasern in der Polymermasse liegt vorzugsweise bei 30 bis 70 Gew.-%, insbesondere bei 45 bis 65 Gew.-%.

In einer weiteren Ausführungsform enthält das Polymermaterial eine Mischung aus Kurzfasern und Langfasern. Dabei liegt der Anteil an Langfasern am Gesamtfaseranteil vorzugsweise bei 5 bis 95 Gew.-% und der Anteil an Kurzfasern entsprechend bei 95 bis 5 Gew.-%. Besonders bevorzugt liegt der Anteil an Langfasern bezogen auf den Gesamtfaseranteil im Bereich von 15 bis 85 Gew.-% und der Anteil an Kurzfasern entsprechend bei 85% bis 15 Gew.-%.

Zusätzlich zu den Fasern können auch beliebige andere Füllstoffe, die dem Fachmann bekannt sind und die steifigkeits- und/oder festigkeitserhöhend wirken, im Kunststoffmaterial enthalten sein. Hierzu zählen unter anderem auch beliebige Partikel ohne Vorzugsrichtung. Derartige Partikel sind im Allgemeinen kugelförmig, plättchenförmig oder zylindrisch. Die tatsächliche Form der Partikel kann dabei von der idealisierten Form abweichen. So können insbesondere kugelförmige Partikel in der Realität zum Beispiel auch tropfenförmig oder abgeflacht sein.

Neben Fasern eingesetzte Verstärkungsmaterialien sind zum Beispiel Graphit, Kreide, Talkum und nanoskalige Füllstoffe.

Besonders bevorzugt zur Verstärkung werden Glasfasern oder Kohlenstofffasern eingesetzt. Insbesondere bevorzugt als Material zur Herstellung des Radkörpers sind glasfaserverstärkte Polyamide.

Wenn Polyamide zur Verstärkung eingesetzt werden, so ist es möglich, die Felge durch ein sogenanntes Polyamid-RIM-Verfahren herzustellen. Hierzu werden Endlosfasern in ein Werkzeug eingelegt und mit einer Monomerlösung getränkt. Anschließend wird die Monomerlösung zum Polymer ausgehärtet.

In einer bevorzugten Ausführungsform ist am Radkörper und/oder an der Blende eine umlaufende Opferrippe ausgebildet. Die Opferrippe dient als Schutz des eigentlichen Rades und kann z. B. bei unvorsichtigem Fahren bei Kontakt mit einem Bordstein beschädigt werden. Die Opferrippe ist vorzugsweise so gestaltet, dass diese bei Beschädigung auf einfache Weise ersetzt werden kann. Hierzu ist es insbesondere vorteilhaft, wenn die Opferrippe lösbar mit der Blende und/oder mit dem Radkörper verbunden ist. Hierbei ist es z. B. möglich, dass die Opferrippe mit dem Radkörper und/oder mit der Blende verschraubt und/oder verclipst wird. Durch die Opferrippe wird bei einem Kontakt des Rades mit einem Bordstein nur die Opferrippe beschädigt und das Rad selbst bleibt unbeschädigt. Dies erlaubt auf einfache Weise eine Reparatur des Rades, ohne dass das gesamte Rad ausgetauscht werden muss.

Alternativ ist es auch möglich, die Opferrippe formschlüssig mit der Blende und/oder dem Radkörper zu verbinden.

Die Opferrippe ist vorzugsweise umlaufend oder radial ausgerichtet oder in Kreuzrippenstruktur oder unterbrochen oder in beliebiger Form ausgeführt.

In einer bevorzugten Ausführungsform weist die Blende die Opferrippe auf, wobei die Opferrippe aus einem gegenüber dem Polymermaterial der Blende verstärkten Polymermaterial gefertigt ist. Durch die Fertigung der Opferrippe aus einem gegenüber dem Polymermaterial der Blende verstärkten Polymermaterial ist die Opferrippe gegen äußere Einflüsse stabiler als die Blende und wird auch nicht sofort geschädigt, wenn der Fahrer des Kraftfahrzeuges zum Beispiel mit dem Rad gegen einen Bordstein fährt. Alternativ dazu ist es auch möglich, die Opferrippe aus einem energieabsorbierenden Material beispielsweise einem Schaumstoff oder einem elastischen Material wie einem Elastomer, thermoplastischem Polyurethan (TPU) oder einem thermoplastischen Elastomer (TPE) auszuführen.

Der Radkörper wird vorzugsweise durch ein Spritzgussverfahren oder ein Gießverfahren hergestellt. Um den Radkörper in einem Teil herstellen zu können, ist es bevorzugt, wenn der Felgenstern oder die Radscheibe keine Hinterschnitte aufweisen. Durch die Vermeidung von Hinterschnitten am Felgenstern oder der Radscheibe kann ein einfach konstruiertes Werkzeug zur Herstellung des Radkörpers verwendet werden.

Zur zusätzlichen Verstärkung ist es jedoch möglich, dass der Felgenstern oder die Radscheibe oder auch das Felgenband Rippen aufweisen. Wenn Rippen an der Radscheibe vorgesehen sind, so verlaufen diese vorzugsweise in radialer Richtung. Rippen am Felgenband können als Kreuzrippenstruktur ausgebildet sein. Hierbei ist es besonders bevorzugt, wenn die Rippen zur Umfangsrichtung gedreht sind. Bevorzugt sind die Rippen dabei um 30° bis 60° zur Umfangsrichtung gedreht, beispielsweise um 45°.

Zur Befestigung des Rades an einer Achse des Kraftfahrzeuges sind Durchgangsbohrungen vorgesehen. Aufgrund der hohen Kräfte, die auf den Radkörper und die Durchgangsbohrungen wirken, besteht die Gefahr, dass der Radkörper im Bereich der Durchgangsbohrungen beginnt, zu fließen und sich hierdurch verformt. Um dies zu vermeiden, ist in einer bevorzugten Ausführungsform in den Durchgangsbohrungen zur Aufnahme von Befestigungsmitteln jeweils eine Hülse aus einem Metall oder einer Keramik aufgenommen, die mit dem Polymermaterial des Radkörpers formschlüssig verbunden ist. Die formschlüssige Verbindung der Hülse aus dem Metall oder der Keramik wird dadurch erzielt, dass bei der Herstellung des Radkörpers zunächst die Hülsen in das Werkzeug eingelegt werden und anschließend die Hülsen mit dem Polymermaterial für den Radkörper umgespritzt werden.

Als Metall für die Hülsen eignen sich zum Beispiel Aluminium, Eisen, Titan oder Magnesium, wobei die Metalle auch als Mischungen oder in Form von Legierungen vorliegen können. Wenn Eisen eingesetzt wird, so liegt dieses vorzugsweise als Stahl vor. Die Hülsen können alternativ auch als Eisen-Gussteile gefertigt werden, wobei das Eisen in diesem Fall sowohl als Stahlguss als auch als Grauguss eingesetzt werden kann.

Geeignete Keramiken, aus denen die Hülsen gefertigt sein können, sind zum Beispiel Keramiken auf Basis von Aluminiumoxid oder Siliziumoxid.

Alternativ zur Verwendung von Hülsen, die in den Durchgangsbohrungen zur Aufnahme von Befestigungsmitteln aufgenommen sind, ist es auch möglich, einen Adapter vorzusehen, der im Bereich der Nabe mit dem Felgenstern oder der Radscheibe verbunden ist, wobei der Adapter Erhebungen aufweist, die in Vertiefungen im Bereich des Felgensterns oder der Radscheibe eingreifen. Das Rad wird dann mit dem Adapter an einer Achse des Kraftfahrzeugs befestigt. Der Adapter kann einteilig mit der Radhalterung an der Fahrzeugachse ausgebildet sein oder ein separates Teil sein, wobei der Adapter in diesem Fall einteilig mit dem Rad ausgebildet sein kann und mindestens eine Fläche aufweist, die in Kontakt mit der Radhalterung an der Fahrzeugachse ist. Der Adapter kann aus den gleichen Metallen gefertigt sein, wie sie vorstehend für die Hülsen beschrieben sind. Alternativ ist es auch möglich, den Adapter aus einer Keramik zu fertigen.

Der Adapter weist zur Kraftübertragung Erhebungen auf, die in Vertiefungen im Felgenstern oder in der Radscheibe eingreifen. Durch die Erhebungen, die in Vertiefungen am Rad eingreifen, wird keine Kraft durch Reibung direkt auf das Rad übertragen und die Verformung des Rades durch Kriechen im Bereich der Befestigungsmittel wird soweit reduziert, dass es für die Funktion des Rades nicht mehr schädlich ist.

Die erfindungsgemäße Ausgestaltung des Rades mit Radkörper und separater Blende erlaubt es, dass die Blende Aussparungen aufweist, wobei diese an Positionen angeordnet sind, an denen sich auch Aussparungen am Felgenstern des Radkörpers befinden. Hierdurch wird eine optische Einheit zwischen Felgenstern des Radkörpers und Blende erzielt, wobei beliebige Ausführungen der Blende möglich sind, ohne dass im Bereich der Aussparungen der Blende Teile des Radkörpers zu sehen sind. Dies erlaubt eine optische Einheit von Radkörper und Blende.

Ein Verfahren zur Herstellung des Rades umfasst folgende Schritte:
(a) Formen des Radkörpers,
(b) Formen der Blende,
(c) Verbinden von Radkörper und Blende.

Das Formen des Radkörpers und der Blende kann dabei durch jedes beliebige, dem Fachmann bekannte Verfahren zum Spritzgießen oder Spritzprägen durchgeführt werden. Alternativ zum Spritzgießen oder Spritzprägen ist es auch möglich, den Radkörper und/oder die Blende durch ein beliebiges anderes Gießverfahren herzustellen. So können zum Beispiel Faserverbünde mit einer Monomerlösung umgossen und anschließend ausgehärtet werden. Weiterhin ist es auch möglich, einen mit Monomerlösung imprägnierten Faserverbund zu formen und auszuhärten, wobei dieses Formverfahren insbesondere zur Herstellung der Blende geeignet ist. Besonders bevorzugt ist es jedoch, Blende und Radkörper in einem Spritzgießverfahren zu formen.

Das Verbinden von Radkörper und Blende kann zum einen nach dem Herstellen von Radkörper und Blende, beispielsweise durch Verschweißen, Verkleben, Vernieten, Verschrauben oder Verclipsen erfolgen. Alternativ ist auch möglich, zunächst die Blende herzustellen, diese in eine Form zur Herstellung des Radkörpers einzulegen und anschließend die Blende mit dem Polymermaterial für den Radkörper zu umspritzen oder umgießen, wodurch Radkörper und Blende zu einem integralen Bauteil verbunden werden.

Neben dem Verkleben, Verschweißen, Vernieten, Verclipsen oder Verschrauben oder dem Umspritzen der Blende zur Verbindung von Blende mit dem Radkörper ist auch möglich, die Blende mit dem Radkörper beispielsweise durch eine Schlaufenverbindung oder eine Bolzenverbindung zu verbinden. Bei einer Schlaufenverbindung erfolgt die Kraftübertragung beispielsweise durch eine schlaufenförmige Teil- oder Vollumschlingung eines Bolzens oder eines Flansches durch einen Strang oder ein Seil.

Zum Verbinden von Radkörper und Blende ist es insbesondere bevorzugt, wenn an jeweiligen Verbindungsbereichen mindestens ein den Radkörper haltendes und teilweise aufnehmendes erstes Werkzeugteil und mindestens ein die Blende haltendes und teilweise aufnehmendes zweites Werkzeugteil vorgesehen sind, wobei das mindestens eine erste Werkzeugteil die Verbindungsbereiche des Radkörpers und das mindestens eine zweite Werkzeugteil die Verbindungsbereiche der Blende nicht überdeckt, und wobei das mindestens eine erste Werkzeugteil und das mindestens eine zweite Werkzeugteil mit den einander zugewandten Verbindungsbereichen von Radkörper und Blende einander so angenähert werden, dass die Verbindungsbereiche von Radkörper und Blende aneinander angelegt und dabei stoffschlüssig verbunden werden und während des Verbindens der Radkörper in dem mindestens einen ersten Werkzeugteil und die Blende in dem mindestens einen zweiten Werkzeugteil gehalten werden.

Die stoffschlüssige Verbindung, mit der der Radkörper und die Blende miteinander verbunden werden ist vorzugsweise eine Verklebung oder Verschweißung.

Bei einer Verklebung wird auf den Verbindungsbereich des Radkörpers und/oder auf den Verbindungsbereich der Blende ein Klebstoff aufgetragen, bevor die Verbindungsbereiche von Radkörper und Blende aneinander angelegt werden. Das Halten von Blende und Radkörper erfolgt dabei so lange, bis der Klebstoff soweit ausgehärtet ist, dass Radkörper und Blende nicht mehr gegeneinander verschoben werden können.

Bevorzugt ist es jedoch, Blende und Radkörper miteinander zu verschweißen. In diesem Fall ist es zum Beispiel möglich, vor dem aneinander Anlegen der Verbindungsbereiche des Radkörpers und der Blende eine Heizvorrichtung in einen Zwischenraum zwischen den Verbindungsbereichen von Radkörper und Blende einzubringen und die Verbindungsbereiche von Radkörper und Blende anzuschmelzen, die Heizvorrichtung nach dem Anschmelzen der Verbindungsbereiche wieder zu entfernen und die angeschmolzenen Verbindungsbereiche danach aneinander anzulegen, so dass die Verbindungsbereiche des Radkörpers mit den Verbindungsbereichen der Blende verschweißt werden.

In einer Ausführungsform ist für mindestens eines der ersten und zweiten Werkzeugteile ein beweglicher Träger vorgesehen, der nach dem Formen von Radkörper und Blende so bewegt wird, dass die Verbindungsbereiche von Radkörper und Blende einander zugewandt sind. Dies erlaubt es, Radkörper und Blende zu formen und miteinander zu verbinden, ohne dass mindestens eines dieser Teile aus dem Formwerkzeug entnommen werden muss und/oder das Formwerkzeug mit dem darin geformten Teil in eine andere Maschine positioniert werden muss. In diesem Fall sind das erste und zweite Werkzeugteil, in dem der Radkörper und die Blende aufgenommen sind, jeweils Werkzeugteile des Formwerkzeugs, in dem der Radkörper beziehungsweise die Blende geformt wurden. Ganz besonders bevorzugt sind die Formwerkzeuge für Radkörper und Blende Spritzgussformwerkzeuge, bei denen das erste Werkzeugteil für den Radkörper beziehungsweise das zweite Werkzeugteil für die Blende jeweils mit weiteren Werkzeugteilen verschlossen werden, so dass im Inneren die Form für den Radkörper beziehungsweise die Blende entsteht.

Ausführungsbeispiele der Erfindung sind in den Figuren dargestellt und werden in der nachfolgenden Beschreibung näher erläutert.

Es zeigen:
Figur 1 - einen Schnitt durch ein erfindungsgemäß gestaltetes Rad,
Figuren 2 bis 8 - Schritte für ein Verfahren zur Herstellung des Rades.

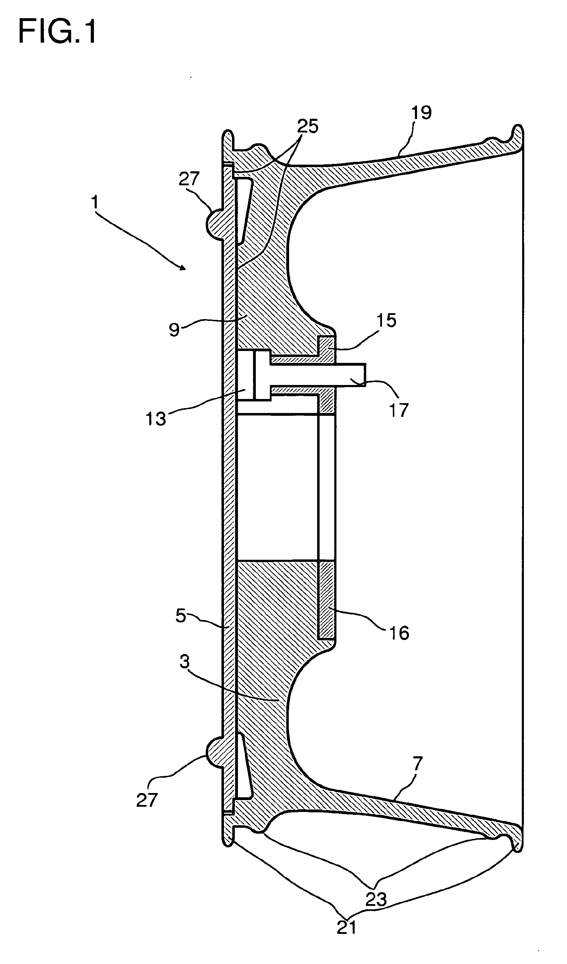

Figur 1 zeigt einen Schnitt durch ein erfindungsgemäß ausgebildetes Rad für ein Kraftfahrzeug.

Ein Rad 1 für ein Kraftfahrzeug umfasst einen Radkörper 3 und eine Blende 5.

Erfindungsgemäß ist der Radkörper 3 aus einem Polymermaterial gefertigt. Um eine ausreichend große Stabilität des Radkörpers 3 zu erhalten, ist das Polymermaterial vorzugsweise verstärkt. Zur Verstärkung können Fasern in Form von Kurzfasern, Langfasern oder Endlosfasern eingesetzt werden. Bevorzugt ist der Einsatz von Langfasern. Als Polymermaterial für den Radkörper 3 eignen sich thermoplastische oder duroplastische Polymere, wie sie vorstehend beschrieben sind.

Der Radkörper 3 umfasst ein Felgenband 7 zur Aufnahme eines Reifens und einen Felgenstern 9. Im Felgenstern 9 sind Durchgangsbohrungen 13 ausgebildet, durch die Befestigungsmittel zur Befestigung des Radkörpers 3 an einer Fahrzeugachse, üblicherweise an einer Bremstrommel oder Bremsscheibe, geführt werden können.

In den Durchgangsbohrungen 13 ist vorzugsweise jeweils eine Hülse 15 aufgenommen. Die Hülse 15 dient zur zusätzlichen Stabilisierung im Bereich der jeweiligen Durchgangsbohrung 13, um eine Beschädigung des Radkörpers 3 durch die eingesetzten Befestigungsmittel zu vermeiden. Die Hülse wird üblicherweise aus einem Metall oder einer Keramik gefertigt und wird vorzugsweise bei der Herstellung des Radkörpers 3 eingegossen, so dass die Hülse 15 formschlüssig mit dem Radkörper 3 verbunden ist. Zusätzlich zur Hülse 15 kann auch ein Einleger 16 vorgesehen sein, der eine Anlagefläche für die Montage des Rades 1 bildet. In diesem Fall ist es möglich, Einleger 16 und Hülsen 15 als separate Bauteile vorzusehen oder die Hülsen 15 einteilig mit dem Einleger 16 auszubilden.

Um den Radkörper 3 an der Fahrzeugachse zu befestigen, werden als geeignete Befestigungsmittel zum Beispiel Radschrauben 17 verwendet. Die Radschrauben 17 erlauben eine lösbare Verbindung von Radkörper 3 mit Fahrzeugachse, so dass zum Beispiel bei einer Beschädigung des Rades oder bei einem nötigen Reifenwechsel das Rad auf einfache Weise demontiert werden kann.

Das Felgenband 7 umfasst üblicherweise ein äußeres Felgenbett 19. An seinen äußeren Rändern ist das äußere Felgenbett 19 mit einem Felgenhorn 21 abgeschlossen. Das Felgenhorn 21 dient zur Halterung eines auf das Rad 1 aufgezogenen Reifens. Hierbei wird der Reifen mit seiner äußeren Seite gegen das Felgenhorn 21 gedrückt. Bei Verwendung eines schlauchlosen Reifens ist es weiterhin erforderlich, ein Verschieben des Reifens durch den ausgeübten Druck beim Fahren nach innen zu vermeiden. Hierzu weist das äußere Felgenbett 19 sogenannte Humps 23 auf. Die Seitenwand des aufgezogenen Reifens wird so zwischen dem Felgenhorn 21 und dem Hump 23 gehalten, wobei der Hump 23 an der Innenseite der Reifenwand anliegt.

Die Blende 5 dient zum einen zur zusätzlichen Stabilisierung des Rades 1 und zum anderen auch als Design-Element. Hierzu kann die Blende 5 in jeder beliebigen Gestalt ausgebildet sein. Durch eine entsprechende Gestaltung der Blende 5 ist es auch möglich, dass dieses zur Verbesserung der Aerodynamik des Kraftfahrzeugs eingesetzt wird.

Die Blende 5 wird kraftschlüssig, formschlüssig oder stoffschlüssig mit dem Radkörper 3 verbunden. In der in Figur 1 dargestellten Ausführungsform ist die Blende 5 formschlüssig mit dem Radkörper 3 verbunden.

Bei einer kraftschlüssigen Verbindung von Blende 5 und Radkörper 3 eignet sich zum Beispiel eine Schraubverbindung, eine Nutverbindung oder eine Verbindung durch Clipsen. Eine formschlüssige Verbindung, wie sie in Figur 1 dargestellt ist, kann zum Beispiel durch Verschweißen oder Verkleben erfolgen. Hierzu wird die Blende 5 an Verbindungsstellen 25 mit dem Radkörper 3 verbunden. Um eine stabile Verbindung zu erhalten, laufen die Verbindungsstellen 25 dabei vorzugsweise ringförmig über den Radkörper 3. Um eine Schweißverbindung zu erzielen, ist es zum Beispiel möglich, sowohl den Radkörper im Bereich der Verbindungsstellen 25, als auch die Blende 5 im Bereich der Verbindungsstellen 25 lokal zu erwärmen und anzuschmelzen, und dann die Blende 5 auf den Radkörper 3 aufzudrücken. Das Erwärmen kann dabei zum Beispiel durch Reibung oder durch Aufbringen einer lokalen Beheizung erfolgen.

Wenn die Blende 5 aus einem nicht-thermoplastischen Material gefertigt ist, beispielsweise aus einem Duroplasten oder aus einem Metall, und somit eine Verbindung durch Schweißen nicht möglich ist, ist es zum Erzielen einer formschlüssigen Verbindung auch möglich, die Blende 5 zum Beispiel mit dem Polymermaterial des Radkörpers 3 zu umspritzen.

Zum Schutz des Rades vor Beschädigungen zum Beispiel durch Kontakt mit einem Bordstein ist es vorteilhaft, wenn am Rad 1 eine Opferrippe 27 ausgebildet ist. Die Opferrippe 27 ist vorzugsweise ringförmig um die Achse des Rades 1 angeordnet und kann, wie hier dargestellt, an der Blende 5 ausgebildet sein. Alternativ ist es auch möglich, die Opferrippe 27 am Radkörper 3 zum Beispiel im Bereich des Felgenbandes 7 auszubilden.

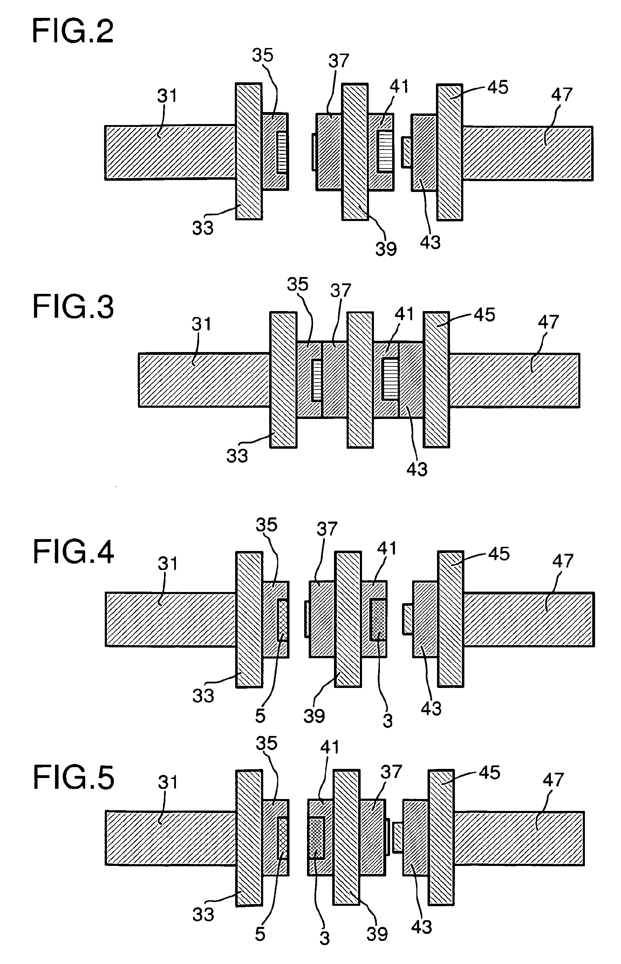

Ein mögliches Verfahren zur Herstellung des Rades 1 ist schematisch in den Figuren 2 bis 8 dargestellt.

Eine Vorrichtung zur Herstellung des Rades 1 umfasst ein erstes Spritzguss-Aggregat 31 mit einer ersten Aufspannung 33, die mit einer ersten Werkzeughälfte 35 zur Herstellung der Blende 5 verbunden ist. Eine zweite Werkzeughälfte 37, mit der die erste Werkzeughälfte 35 verschlossen wird, ist mit einer Wendeplatte 39 verbunden. Auf der der zweiten Werkzeughälfte 37 gegenüberliegenden Seite der Wendeplatte 39 ist eine zweite Werkzeughälfte 41 zur Herstellung des Radkörpers 3 angebracht. Mit der zweiten Werkzeughälfte 41 lässt sich eine erste Werkzeughälfte 43 zur Herstellung des Radkörpers schließen. Die erste Werkzeughälfte 43 zur Herstellung des Radkörpers 3 ist mit einer zweiten Aufspannung 45 verbunden, die Teil eines zweiten Spritzguss-Aggregates 47 ist.

In einem ersten Schritt werden nun die erste Werkzeughälfte 35 und die zweite Werkzeughälfte 37 für die Blende sowie die erste Werkzeughälfte 43 und die zweite Werkzeughälfte 41 für den Radkörper verschlossen. Dies ist in Figur 3 dargestellt. Nach dem Schließen der ersten Werkzeughälfte 35 und der zweiten Werkzeughälfte 37 für die Blende 5 und der ersten Werkzeughälfte 43 und der zweiten Werkzeughälfte 41 für den Radkörper 3 wird jeweils das Polymermaterial zur Herstellung von Blende 5 beziehungsweise Radkörper 3 eingespritzt. Nach dem Abkühlen und Erstarren der Kunststoffmassen in den jeweiligen Formen, die durch die Werkzeughälften 35, 37; 41, 43 gebildet werden, wird das Werkzeug wieder geöffnet. Dies ist in Figur 4 dargestellt. Hierbei befindet sich in einer Ausnehmung des ersten Werkzeuges, hier in der ersten Werkzeughälfte 35, die Blende 5 und in einer zweiten Ausnehmung, hier in der zweiten Werkzeughälfte 41, der Radkörper 3. Dies ist jeweils schematisch durch ein Rechteck dargestellt.

In einem nächsten Schritt wird die Wendeplatte 39 gedreht, so dass sich die Blende 5 und der Radkörper 3 gegenüberliegen. Dies ist in Figur 5 gezeigt.

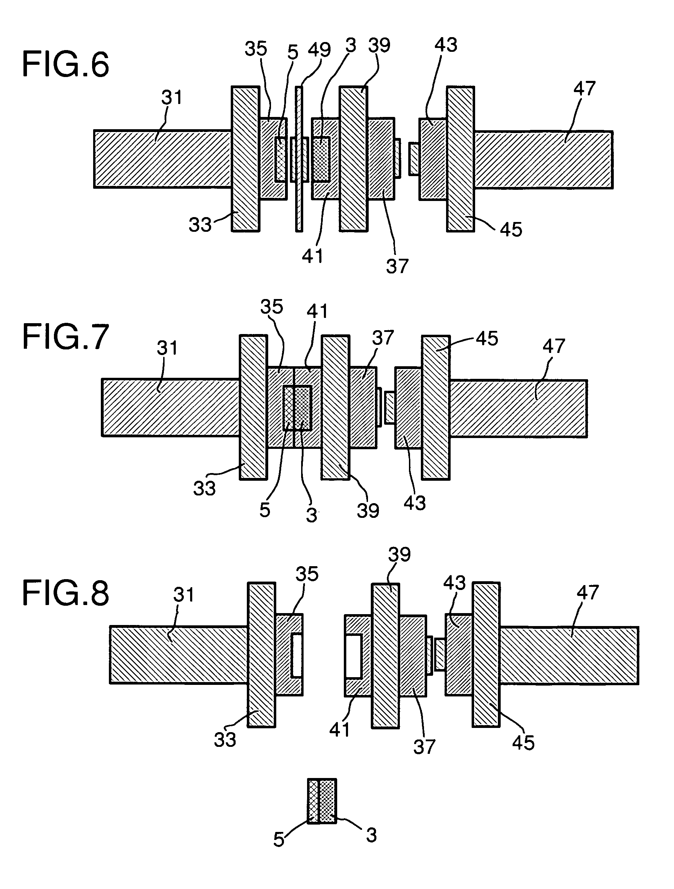

In einem nächsten Schritt, der in Figur 6 dargestellt ist, wird zwischen die Blende 5 und den Radkörper 3 ein Heizelement eingebracht. Das Heizelement kann zum Beispiel eine Spiegel-Joint-Melt-Schweißvorrichtung 49 sein. Mit der Schweißvorrichtung 49 werden im Bereich der Verbindungsstellen 25 die Blende 5 und der Radkörper 3 angeschmolzen. Dies kann entweder durch Berührung und Reibung, indem die Schweißvorrichtung 49 beispielsweise um die Zentralachse gedreht wird, erfolgen, oder es wird mit einer Strahlungsheizung, durch Anblasen mit einem heißen Gas oder durch Kontakt mit einem aufgeheizten Teil erwärmt.

Nach dem Anschmelzen der Verbindungsstellen 25 werden in einem nächsten Schritt der Radkörper 3 und die Blende 5 miteinander verbunden. Dies ist schematisch in Figur 7 dargestellt. Sobald die Blende 5 am Radkörper 3 haftet, wird die Form wieder geöffnet, wie dies in Figur 8 dargestellt ist, und das Rad, umfassend den Radkörper 3 mit daran angebrachter Blende 5, wird entnommen.

Abschließend wird die Wendeplatte 39 wieder gedreht, so dass sich die erste Werkzeughälfte 35 und die zweite Werkzeughälfte 37 zur Herstellung der Blende 5 und die erste Werkzeughälfte 43 und die zweite Werkzeughälfte 41 zur Herstellung des Radkörpers gegenüberliegen, wie dies in Figur 2 gezeigt ist, und der Spritzgieß-Prozess kann für das nächste Rad wiederholt werden.

### Bezugszeichenliste

- 1: Rad
- 3: Radkörper
- 5: Blende
- 7: Felgenband
- 9: Felgenstern
- 13: Durchgangsbohrung
- 15: Hülse
- 16: Einleger
- 17: Radschraube
- 19: äußeres Felgenbett
- 21: Felgenhorn
- 23: Hump
- 25: Verbindungsstelle
- 27: Opferrippe
- 31: erstes Spritzguss-Aggregat
- 33: erste Aufspannung
- 35: erste Werkzeughälfte
- 37: zweite Werkzeughälfte
- 39: Wendeplatte
- 41: zweite Werkzeughälfte
- 43: erste Werkzeughälfte
- 45: zweite Aufspannung
- 47: zweites Spritzguss-Aggregat
- 49: Spiegel-Joint-Melt-Schweißvorrichtung

## Patentansprüche

1. Rad für ein Kraftfahrzeug, umfassend einen Radkörper (3) mit einem Felgenband (7) zur Aufnahme eines Reifens und einen Felgenstern (9) oder eine Radscheibe, wobei im Felgenstern (9) oder der Radscheibe Durchgangsbohrungen (13) zur Aufnahme von Befestigungsmitteln (17) des Radkörpers (3) an einer Fahrzeugachse ausgebildet sind, **dadurch gekennzeichnet, dass** der Radkörper (3) aus einem verstärkten Polymermaterial gefertigt ist und an seiner Außenseite mit einer Blende (5) kraftschlüssig oder formschlüssig oder stoffschlüssig so verbunden ist, dass die Blende (5) den Felgenstern (9) oder die Radscheibe abdeckt und eine zusätzliche Verstärkung des Rades erzielt wird.

2. Rad gemäß Anspruch 1, **dadurch gekennzeichnet, dass** Verbindungsstellen, an denen die Blende (5) mit dem Radkörper (3) verbunden ist, ringförmig über den Radkörper (3) verlaufen.

3. Rad gemäß Anspruch 1 oder 2, **dadurch gekennzeichnet, dass** die Blende (5) aus einem thermoplastischen Polymermaterial, einem duroplastischen Material oder einem Metall gefertigt ist.

4. Rad gemäß einem der Ansprüche 1 bis 3, **dadurch gekennzeichnet, dass** das Polymermaterial für den Radkörper (3) und/oder für die Blende (5) ausgewählt ist aus Polybutylenterephthalat, Polyehtylensulfon, Polysulfon, Polypropylen oder Polyamid.

5. Rad gemäß einem der Ansprüche 1 bis 4, **dadurch gekennzeichnet, dass** zur Verstärkung des Polymermaterials Kurzfasern, Langfasern oder Endlosfasern eingesetzt werden, wobei die Fasern zur Verstärkung des Polymermaterials vorzugsweise Glasfasern, Kohlenstofffasern, Aramidfasern, Kaliumtitanatfasern, Borfasern, Basaltfasern, Mineralfasern oder Metallfasern sind.

6. Rad gemäß einem der Ansprüche 1 bis 5, **dadurch gekennzeichnet, dass** der Radkörper (3) und/oder die Blende (5) eine Opferrippe aufweist, wobei vorzugsweise die Blende (5) die Opferrippe aufweist und die Opferrippe aus einem gegenüber dem Polymermaterial der Blende (5) verstärkten Polymermaterial oder einem elastischen oder einem energieabsorbierenden Polymermaterial gefertigt ist.

7. Rad gemäß einem der Ansprüche 1 bis 6, **dadurch gekennzeichnet, dass** der Felgenstern (9) oder die Radscheibe keine Hinterschnitte aufweisen.

8. Rad gemäß einem der Ansprüche 1 bis 7, **dadurch gekennzeichnet, dass** in den Durchgangsbohrungen (13) zur Aufnahme von Befestigungsmitteln (17) jeweils eine Hülse (15) aus einem Metall oder einer Keramik aufgenommen ist, die mit dem Polymermaterial des Radkörpers (3) formschlüssig verbunden ist.

9. Rad gemäß einem der Ansprüche 1 bis 8, **dadurch gekennzeichnet, dass** die Blende (5) Aussparungen aufweist, die an Positionen angeordnet sind, an denen sich auch Aussparungen am Felgenstern (9) des Radkörpers (3) befinden.

10. Verfahren zur Herstellung eines Rades gemäß einem der Ansprüche 1 bis 9, folgende Schritte umfassend:
(a) Formen des Radkörpers (3),
(b) Formen der Blende (5),
(c) Verbinden von Radkörper (3) und Blende (5),
**dadurch gekennzeichnet, dass** zum Verbinden von Radkörper (3) und Blende (5) an jeweiligen Verbindungsbereichen mindestens ein den Radkörper (3) haltendes und teilweise aufnehmendes erstes Werkzeugteil und mindestens ein die Blende (5) haltendes und teilweise aufnehmendes zweites Werkzeugteil vorgesehen sind, wobei das mindestens eine erste Werkzeugteil die Verbindungsbereiche des Radkörpers (3) und das mindestens eine zweite Werkzeugteil die Verbindungsbereiche der Blende (5) nicht überdeckt, und wobei das mindestens eine erste Werkzeugteil und das mindestens eine zweite Werkzeugteil mit den einander zugewandten Verbindungsbereichen von Radkörper (3) und Blende (5) einander so angenähert werden, dass die Verbindungsbereiche von Radkörper (3) und Blende (5) aneinander angelegt und dabei stoffschlüssig verbunden werden und während des Verbindens der Radkörper (3) in dem mindestens einen ersten Formwerkzeugteil und die Blende (5) in dem mindestens einen zweiten Formwerkzeugteil gehalten werden.

11. Verfahren gemäß Anspruch 10, **dadurch gekennzeichnet, dass** die Blende (5) mit dem Radkörper (3) verklebt, verschweißt, vernietet, verclipst oder verschraubt wird oder mit einer Schlaufenverbindung oder Bolzenverbindung verbunden wird.

12. Verfahren gemäß Anspruch 10 oder 11, **dadurch gekennzeichnet, dass** die stoffschlüssige Verbindung eine Verklebung oder Verschweißung ist.

13. Verfahren gemäß einem der Ansprüche 10 bis 12, **dadurch gekennzeichnet, dass** vor dem aneinander Anlegen der Verbindungsbereiche des Radkörpers (3) und der Blende (5) eine Heizvorrichtung in einen Zwischenraum zwischen den Verbindungsbereichen von Radkörper (3) und Blende (5) eingebracht wird und die Verbindungsbereiche von Radkörper (3) und Blende (5) angeschmolzen werden, die Heizvorrichtung nach dem Anschmelzen der Verbindungsbereiche wieder entfernt wird und die angeschmolzenen Verbindungsbereiche danach aneinander angelegt werden, so dass die Verbindungsbereiche des Radkörpers (3) mit den Verbindungsbereichen der Blende (5) verschweißt werden.

14. Verfahren gemäß einem der Ansprüche 10 bis 13, **dadurch gekennzeichnet, dass** für mindestens eines der ersten und zweiten Formwerkzeugteile ein beweglicher Träger vorgesehen ist, der nach dem Formen von Radkörper (3) und Blende (5) so bewegt wird, dass die Verbindungsbereiche von Radkörper (3) und Blende (5) einander zugewandt sind.

15. Verfahren gemäß einem der Ansprüche 10 bis 14, **dadurch gekennzeichnet, dass** die Blende (5) und der Radkörper (3) jeweils durch ein Spritzgießverfahren geformt werden.

## Claims

1. A wheel for a motor vehicle, comprising a wheel body (3) with a rim tape (7) for receiving a tire and a rim star (9) or a wheel disk, through-holes (13) for receiving fastening means (17) of the wheel body (3) on a vehicle axle being formed in the rim star (9) or the wheel disk, wherein the wheel body (3) is produced from a reinforced polymer material and is connected on its outer side non-positively or positively or integrally to a cap (5) in such a way that the cap (5) covers the rim star (9) or the wheel disk and an additional reinforcement of the wheel is provided.

2. The wheel according to claim 1, wherein connection points, at which the cap (5) is connected to the wheel body (3), extend annularly over the wheel body (3).

3. The wheel according to claim 1 or 2, wherein the cap (5) is produced from a thermoplastic polymer material, a thermosetting material or a metal.

4. The wheel according to any of claims 1 to 3, wherein the polymer material for the wheel body (3) and/or for the cap (5) is selected from polybutylene terephthalate, polyethylene sulfone, polysulfone, polypropylene or polyamide.

5. The wheel according to any of claims 1 to 4, wherein short fibers, long fibers or continuous fibers are used for reinforcing the polymer material, the fibers for reinforcing the polymer material preferably being glass fibers, carbon fibers, aramid fibers, potassium titanate fibers, boron fibers, basalt fibers, mineral fibers or metal fibers.

6. The wheel according to any of claims 1 to 5, wherein the wheel body (3) and/or the cap (5) has a sacrificial rib, the cap (5) preferably having the sacrificial rib and the sacrificial rib being produced from a polymer material which is reinforced with respect to the polymer material of the cap (5) or an elastic or an energyabsorbing polymer material.

7. The wheel according to any of claims 1 to 6, wherein the rim star (9) or the wheel disk have no undercuts.

8. The wheel according to any of claims 1 to 7, wherein the through-holes (13) for receiving fastening means (17) each receive a sleeve (15) which is made of a metal or a ceramic and is connected positively to the polymer material of the wheel body (3).

9. The wheel according to any of claims 1 to 8, wherein the cap (5) has recesses, which are arranged at positions at which recesses are also located on the rim ring (9) of the wheel body (3).

10. A process for producing the wheel according to any of claims 1 to 9, comprising the following steps:
(a) the wheel body (3) is molded,
(b) the cap (5) is molded,
(c) the wheel body (3) and the cap (5) are connected,
wherein, to connect the wheel body (3) and the cap (5), at least one first mold part which holds and partially receives the wheel body (3) and at least one second mold part which holds and partially receives the cap (5) are provided at respective connection regions, wherein the at least one first mold part does not overlap the connection regions of the wheel body (3) and the at least one second mold part does not overlap the connection regions of the cap (5), and wherein the at least one first mold part and the at least one second mold part are drawn closer to one another, with the mutually facing connection regions of the wheel body (3) and of the cap (5), in such a way that the connection regions of the wheel body (3) and of the cap (5) are placed against one another and in the process are integrally connected, and during the connection the wheel body (3) is held in the at least one first mold part and the cap (5) is held in the at least one second mold part.

11. The process according to claim 10, wherein the cap (5) is adhesively bonded, welded, riveted, snap-fitted or screwed to the wheel body (3) or is connected by way of a loop connection or bolt connection.

12. The process according to claim 10 or 11, wherein the integral connection is an adhesive bond or welded connection.

13. The process according to any of claims 10 or 12, wherein, before the connection regions of the wheel body (3) and of the cap (5) are placed against one another, a heating apparatus is introduced into a space between the connection regions of the wheel body (3) and of the cap (5), and the connection regions of the wheel body (3) and of the cap (5) are incipiently melted, the heating apparatus is removed again after the connection regions have been incipiently melted and then the incipiently melted connection regions are placed against one another, such that the connection regions of the wheel body (3) are welded to the connection regions of the cap (5).

14. The process according to any of claims 10 to 13, wherein a movable carrier is provided for at least one of the first and second molding tool parts and, after the wheel body (3) and the cap (5) have been molded, is moved in such a way that the connection regions of the wheel body (3) and of the cap (5) face one another.

15. The process according to any of claims 10 to 14, wherein the cap (5) and the wheel body (3) are each molded by an injection molding process.

## Revendications

1. Roue pour un véhicule automobile, comprenant un corps de roue (3) avec un rebord de jante (7) destiné à recevoir un pneu et une étoile de jante (9) ou un disque de roue, dans laquelle des trous de passage (13) destinés à recevoir des moyens de fixation (17) du corps de roue (3) à un essieu de véhicule sont pratiqués dans l'étoile de jante (9) ou dans le disque de roue, **caractérisée en ce que** le corps de roue (3) est fabriqué en un matériau polymère renforcé et est assemblé sur son côté extérieur à un panneau (5) par adhérence ou par emboîtement ou par assemblage matériel, de telle manière que le panneau (5) recouvre l'étoile ce jante (9) ou le disque de roue et que l'on obtienne ainsi un renforcement supplémentaire de la roue.

2. Roue selon la revendication 1, **caractérisée en ce que** des points d'assemblage, auxquels le panneau (5) est assemblé au corps de roue (3), sont disposés en couronne sur le corps de roue (3).

3. Roue selon la revendication 1 ou 2, **caractérisée en ce que** le panneau (5) est fabriqué en un matériau polymère thermoplastique, un matériau thermodurcissable ou un métal.

4. Roue selon l'une quelconque des revendications 1 à 3, **caractérisée en ce que** le matériau polymère pour le corps de roue (3) et/ou pour le panneau (5) est sélectionné parmi le polybutylène téréphtalate, le polyéthylène sulfone, le polysulfone, le polypropylène ou le polyamide.

5. Roue selon l'une quelconque des revendications 1 à 4, **caractérisée en ce que** l'on utilise, pour le renforcement du matériau polymère, des fibres courtes, des fibres longues ou des filaments, dans laquelle les fibres destinées au renforcement du matériau polymère sont de préférence des fibres de verre, des fibres de carbone, des fibres d'aramide, des fibres de titanate de potassium, des fibres de bore, des fibres de basalte, des fibres minérales ou des fibres de métal.

6. Roue selon l'une quelconque des revendications 1 à 5, **caractérisée en ce que** le corps de roue (3) et/ou le panneau (5) présente une nervure sacrificielle, dans laquelle de préférence le panneau (5) présente la nervure sacrificielle et la nervure sacrificielle est fabriquée en un matériau polymère renforcé par rapport au matériau polymère du panneau (5) ou en un matériau polymère élastique ou un matériau polymère absorbeur d'énergie.

7. Roue selon l'une quelconque des revendications 1 à 6, **caractérisée en ce que** l'étoile de jante (9) ou le disque de roue ne présente aucune contre-dépouille.

8. Roue selon l'une quelconque des revendications 1 à 7, **caractérisée en ce qu'**une douille (15) en un métal ou une céramique, qui est assemblée par emboîtement au matériau polymère du corps de roue (3), est logée respectivement dans les trous de passage (13) destinés à recevoir des moyens de fixation (17).

9. Roue selon l'une quelconque des revendications 1 à 8, **caractérisée en ce que** le panneau (5) présente des découpes, qui sont disposées à des positions où se trouvent également des découpes sur l'étoile de jante (9) du corps de roue (3).

10. Procédé de fabrication d'une roue selon l'une quelconque des revendications 1 à 9, comprenant les étapes suivantes:
(a) formage du corps de roue (3),
(b) formage du panneau (5),
(c) assemblage du corps de roue (3) et du panneau (5),
**caractérisé en ce qu'**il est prévu, pour l'assemblage du corps de roue (3) et du panneau (5) dans des zones d'assemblage respectives, au moins une première partie d'outil maintenant et contenant en partie le corps de roue (3) et au moins une deuxième partie d'outil maintenant et contenant en partie le panneau (5), dans lequel ladite au moins une première partie d'outil ne recouvre pas les zones d'assemblage du corps de roue (3) et ladite au moins une deuxième partie d'outil ne recouvre pas les zones d'assemblage du panneau (5), et dans lequel ladite au moins une première partie d'outil et ladite au moins une deuxième partie d'outil sont approchées l'une de l'autre avec les zones d'assemblage du corps de roue (3) et du panneau (5) tournées les unes vers les autres, de telle manière que les zones d'assemblage du corps de roue (3) et du panneau (5) soient appliquées les unes sur les autres et soient ainsi matériellement assemblées et que, pendant l'assemblage, le corps de roue (3) soit maintenu dans ladite au moins une première partie d'outil de fermage et que le panneau (5) soit maintenu dans ladite au moins une deuxième partie d'outil de formage.

11. Procédé selon la revendication 10, **caractérisé en ce que** le panneau (5) est collé, soudé, rivé, clipsé ou vissé au corps de roue (3) ou est assemblé par un assemblage à boucles ou un assemblage à boulons.

12. Procédé selon la revendication 10 ou 11, **caractérisé en ce que** l'assemblage matériel est un collage ou un soudage.

13. Procédé selon l'une quelconque des revendications 10 à 12, **caractérisé en ce que**, avant l'application les unes sur les autres des zones d'assemblage du corps de roue (3) et du panneau (5), on introduit un dispositif de chauffage dans un espace intermédiaire entre les zones d'assemblage du corps de roue (3) et du panneau (5) et on fait fondre les zones d'assemblage du corps de roue (3) et du panneau (5), on enlève de nouveau le dispositif de chauffage après la fusion des zones d'assemblage et on applique ensuite les unes sur les autres les zones d'assemblage ainsi fondues, de telle manière que les zones d'assemblage du corps de roue (3) soient soudées aux zones d'assemblage du panneau (5).

14. Procédé selon l'une quelconque des revendications 10 à 13, **caractérisé en ce qu'**il est prévu pour au moins une de la première et de la deuxième partie d'outil de formage un support mobile qui, après le formage du corps de roue (3) et du panneau (5), est déplacé de telle manière que les zones d'assemblage du corps de roue (3) et du panneau (5) soient tournées les unes vers les autres.

15. Procédé selon l'une quelconque des revendications 10 à 14, **caractérisé en ce que** l'on forme le panneau (5) et le corps de roue (3) respectivement par un procédé de moulage par injection.
